# EUROPEAN PATENT SPECIFICATION

(11) **EP 0 835 729 B1**
(45) Date of publication and mention of the grant of the patent: **24.10.2001**
(21) Application number: 97113374.9
(22) Date of filing: 02.08.1997
(51) Int. Cl.: B29C 45/00, B29C 45/40, D06F 37/26

(54) **Improvement in the injection moulding method for producing moulded plastic parts**
Verbesserung im Spritzgiessverfahren zur Herstellung von geformten Kunststoffgegenständen
Amélioration dans le procédé de moulage par injection pour fabriquer des objets moulés en matière plastique

(30) Priority: 08.10.1996 IT PN960056
(43) Date of publication of application: 15.04.1998
(73) Proprietor: Electrolux Zanussi S.p.A., 33170 Pordenone (IT)
(72) Inventor: Durazzani, Piero, 33080 Porcia, Pordenone (IT)
(74) Representative: Agostini, Agostino

(56) References cited:
- DE-A- 2 540 519
- PATENT ABSTRACTS OF JAPAN vol. 96, no. 7, 31 July 1996 & JP 08 080547 A (SEKISUI CHEM CO LTD), 26 March 1996,
- PATENT ABSTRACTS OF JAPAN vol. 7, no. 149 (M-225), 30 June 1983 & JP 58 059826 A (MATSUSHITA DENKI SANGYO KK), 9 April 1983,
- PATENT ABSTRACTS OF JAPAN vol. 16, no. 507 (M-1327), 20 October 1992 & JP 04 187358 A (HITACHI LTD), 6 July 1992,

## Description

The present invention refers to an improved method for injection-moulding parts of plastic materials. In particular, although not solely, the present invention refers to the production of parts having large dimensions and heavy weight such as the wash tubs of household clothes washing machines and the like, for instance of the type disclosed in EP-A-0 601 347 and US-A-5 329 791.

When production volumes are elevated, in order to avoid increasing the number of injection moulding presses for coping with such volumes, which would of course imply considerable amounts of money being having to be invested there, it would be desirable for the dwelling time of the moulded parts in the respective mould to be made as short as possible. The fulfulment of such a requirement is however opposed , in the case of particularly large and heavy parts, by the speed at which the plastic material cools down after injection. The need in fact arises for the ejectors provided in the mould, which exert a localized pressure on the surface of the moulded part in view of knocking it out of the mould, to be prevented from deforming it or, even worse, breaking through it in the case that the plastic material is not sufficiently stiff yet.

A method addressing the above problem is disclosed in document DE-A-25 40 519.

It is therefore a main purpose of the present invention to reduce, in a simple, reliable and safe manner, the dwelling time of moulded plastic parts, particularly those having a large size and a heavy weight, in the respective injection mould, thereby avoiding the need for expensive investments.

The characteristics of the present invention are as recited in the appended claims. The features and advantages of the present invention will anyway be more readily understood from the description of a preferred embodiment thereof which is given below by way of non-limiting example with reference to the accompanying drawings, in which:
- Figure 1 is a perspective view of a wash tub for a top-loading clothes washing machine, in which all those items and details that are not relevant to the purposes of the present invention are not shown;
- Figure 2 is a front, enlarged-scale view of the encircled detail appearing in Figure 1;
- Figure 3 is a cross-sectional view, in a further enlarged scale, of the same item along the III-III plane of Figure 2.

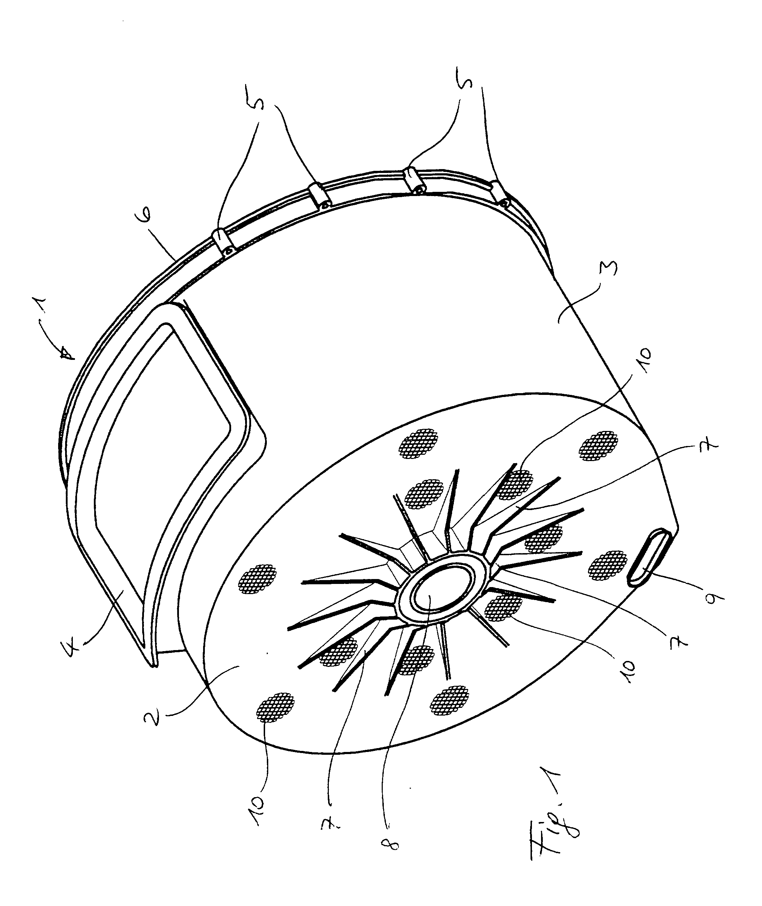

A wash tub made of a plastic material (eg. polypropylene filled with calcium carbonate and/or fiberglass) by an injection moulding process for a top-loading clothes washing machine comprises a single-piece part, generally indicated at 1, such as the one illustrated in Figure 1. Said single-piece part 1 consists of a rear-end disk-shaped wall 2 and a cylindrical mantle 3, wherein this cylindrical mantle 3 is provided with a flanged hopper-like arrangement 4 for loading and unloading the washload and is removably fixed, by means of a plurality of screws (not shown, either), which are adapted to engage corresponding seats 5 that are provided integrally along the flanged front periphery 6 thereof, to the front-end disk-shaped wall (not shown) of the same tub.

The rear-end wall 2 of the tub is provided with a plurality of radially extending ribs 7 that are angularly spaced at equal intervals from each other, starting from a circular through-opening 8 provided to retain the support means for the shaft of the rotating drum and, at the extreme lower periphery, a second through-opening 9 provided for the assembly of a heating element for heating up the washing liquor in the tub (all these items having been omitted in the illustrations since they are generally known to all those skilled in the art and, furthermore, are not relevant to the purposes of the present invention). On the outer, ie. "exposed-to-sight " surface of the part 1, namely on the surface of the rear-end wall 2, there are provided, distributed according to a rational pattern, a plurality of circular plane impressions (10) in correspondence of the positions on which the ejectors, which are providedin the mould to such a purpose, exert their pressure in view of knocking out the part 1 from the mould after the same part 1 has been moulded The impressions 10 are substantially circular in their shape and may have a diameter of up to a few tens of millimeters.

According to its main feature, the present invention calls for the provision, in correspondence of said impressions 10, of localized zones in which the thermal conductance of the part 1 is higher.

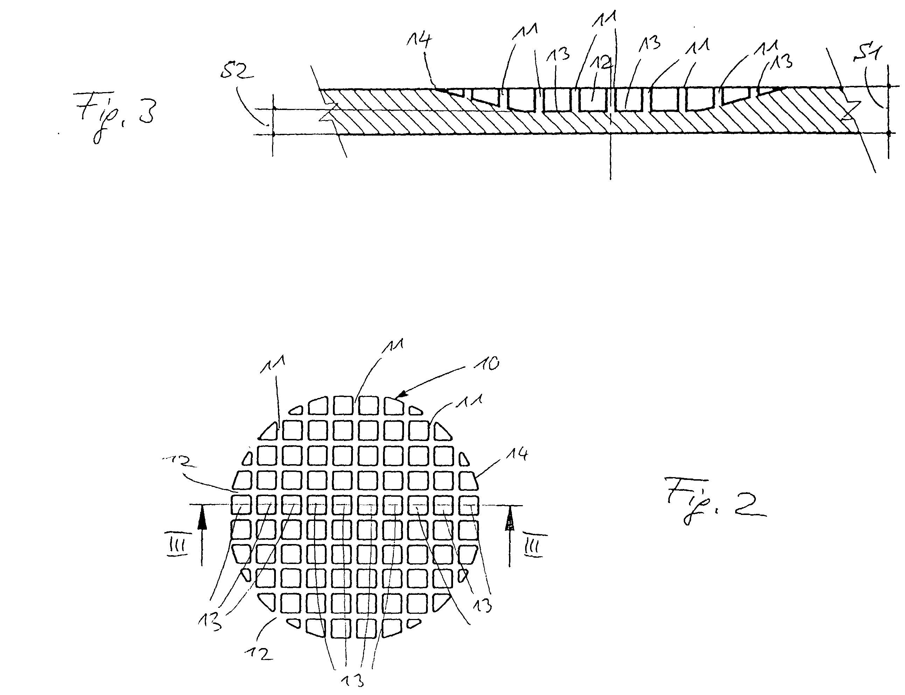

Thanks to the enlarged scale of the respective drawings, Figures 2 and 3 enable a preferred, although not sole manner in which such localized zones having a higher thermal conductance can be provided. The mould used to produce the part in question, ie. the single-piece part 1, is made in such a manner that, in correspondence of each such impression 10, the outer surface thereof (it actually is the surface of the rear-end wall 2) is provided with ckusters of closed-bottom pits 13 formed by grids of mini-ribs 11 and 12 extending perpendicularly to each other. The thickness of the rear-end wall 2 of the tub in correspondence of the periphery 14 of each such cluster of pits, ie. of each impression 10, decreases towards the inner portion of the same impression 10, changing from a maximum value S1 down to a minimum value S2 (Figure 3), in correspondence of the bottom of a substantial part of the pits 13, which is preferably comprised between approx. 15 percent and approx. 70 percent of said maximum value S1.

The presence of the grids of mini-ribs 11 and 12 forming the pits 13, along with the reduction from S1 to S2 of the wall thickness, decisively favours the rapid stiffening of the impressions of the single-piece part 1 in the mould, ie. in correspondence of the ejectors, owing to quicker cooling. The advantage of higher output rates is in this way obtained without any need arising to have resort to significant industrial investments in the purchase of new moulds and/or equipment to correspondingly increase injection-moulding capacity.

The possibility also exist for an existing mould to be "retrofitted" along with the related process for injection-moulding the plastic part involved, ie. modified correspondingly to accomodate the improvemnt according to the teachings of the present invention, so as to be in this way able to very quickly, and with minimal additional costs, cope with sudden significant variations in demand.

It will be appreciated that the principles of the present invention may be implemented by those skilled in the art even in manners that differ from the above described one, as well as for producing other parts than wash tubs for clothes washing machine. In particular, the localized zones with a higher thermal conductance of a moulded part may be obtained by solely relying upon a localized reduction in thickness or locally inserting in the plastic mass a small plate or disk made of an appropriate metal material, which is capable of easily dissipating the heat accumulated in the plastic material during moulding in the zones that are situated in correspondence of the mould ejectors.

## Claims

1. Method for injection moulding a part (1) made of plastic material, provided with a plurality of surface impressions (10) in correspondence of the locations at which the ejectors provided in the mould exert their pressure for knocking out said part after it has been moulded, **characterized in that** localized zones in which the thermal conductance of the part (1) is higher are created in correspondence of said impressions (10).

2. The method according to claim 1, **characterized in that** said part (1) is imparted a thickness that decreases from a maximum value (S1) at the periphery (14) of each impression (10) down to a minimum value (S2) inside the same impression (10).

3. The method according to claim 2, **characterized in that** said minimum value (S2) of the thickness of the part (1) is comprised between approx. 15 percent and approx. 70 percent of said maximum value (S1).

4. The method according to claim 2 or claim 3, **characterized in that**, in correspondence of said impressions (10), on the outer surface of said part (1) there are created clusters of closed-bottom pits (13) formed by grids of mini-ribs (11) and (12) extending perpendicularly to each other, the thickness of the same part (1) having said minimum value (S2) thereof in correspondence of the bottom of a substantial part of said pits (13).

5. The method according to any of the preceding claims, **characterized in that** each such impression (10) is imparted a substantially circular shape.

6. The method according to any of the preceding claims, **characterized in that** it is used to produce wash tubs for residential-type clothes washing machines and the like.

## Patentansprüche

1. Verfahren zum Spritzgießen eines Teils (1) aus Kunststoffmaterial versehen mit mehreren Oberflächenvertiefungen (10) entsprechend den Stellen, an denen die Auswerfer in der Gußform ihren Druck zum Auswerfen des Teils nachdem es gegossen ist, ausüben, **dadurch gekennzeichnet, daß** entsprechend den Vertiefungen (10) örtlich festgelegte Zonen erzeugt werden, in denen die Wärmeleitung des Teils (1) größer ist.

2. Das Verfahren nach Anspruch 1, **dadurch gekennzeichnet, daß** das Teil (1) mit einer Dicke versehen ist, die von einem Maximalwert (S1) am Rande (14) jeder Vertiefung (10) bis hin zu einem Minimalwert (S2) im Inneren derselben abnimmt.

3. Das Verfahren nach Anspruch 2, **dadurch gekennzeichnet, daß** der Minimalwert (S2) der Dicke des Teils (1) zwischen etwa 15 Prozent und etwa 70 Prozent des Maximalwerts (S1) liegt.

4. Das Verfahren nach Anspruch 2 oder 3, **dadurch gekennzeichnet, daß** entsprechend den Vertiefungen (10) auf der äußeren Oberfläche des Teils (1) Gruppen von bodenbehafteten Ausschachtungen (13) erzeugt werden, die durch Gitter aus sich senkrecht zu einander erstreckenden Minirippen (11) und (12) gebildet sind, wobei die Dicke des Teils (1) dessen Minimalwert (S2) hat, entsprechend des Bodens eines wesentlichen Teils der Ausschachtungen (13).

5. Das Verfahren nach einem der vorherigen Ansprüche, **dadurch gekennzeichnet, daß** jede solche Vertiefung (10) mit einer im wesentlichen kreisförmigen Form versehen ist.

6. Das Verfahren nach einem der vorherigen Ansprüche, **dadurch gekennzeichnet, daß** es verwendet wird, um Waschkübel für hausgebräuchliche Kleiderwaschmaschinen oder dergleichen herzustellen.

## Revendications

1. Procédé pour le moulage par injection d'une pièce (1) constituée d'une matière plastique pourvue d'une pluralité d'impressions en surface (10) correspondant aux endroits sur lesquels les éjecteurs, prévus dans le moule, exercent leur pression pour libérer ladite pièce après son moulage, **caractérisé en ce que** des zones localisées, dans lesquelles la conductance thermique de la pièce (1) est supérieure, sont créées en correspondance auxdites impressions (10).

2. Procédé selon la revendication 1, **caractérisé en ce qu'**à ladite pièce (1) on donne une épaisseur qui diminue d'une valeur maximale (S1) à la périphérie (14) de chaque impression (10) jusqu'à une valeur minimale (S2) à l'intérieur de la même impression (10).

3. Procédé selon la revendication 2, **caractérisé en ce que** ladite valeur minimale (S2) de l'épaisseur de la pièce (1) est comprise entre environ 15 pourcent et environ 70 pourcent de ladite valeur maximale (S1).

4. Procédé selon la revendication 2 ou 3,
**caractérisé en ce que**, en correspondance auxdites impressions (10), sur la surface externe de ladite pièce (1), sont créés des groupes de puits à fond fermé (13) formés par des grilles de mini-nervures (11) et (12) s'étendant perpendiculairement l'une par rapport à l'autre, l'épaisseur de la même pièce (1) ayant sadite valeur minimale (S2) en correspondance avec le fond d'une partie importante desdits puits (13).

5. Procédé selon l'une quelconque des revendications précédentes, **caractérisé en ce que** l'on donne à chaque telle impression (10) une forme sensiblement circulaire.

6. Procédé selon l'une quelconque des revendications précédentes, **caractérisé en ce qu'**il est utilisé pour produire des baquets de lavage pour des machines à laver le linge de type à demeure et analogues.
